# EUROPEAN PATENT SPECIFICATION

(11) **EP 3 456 940 B1**
(45) Date of publication and mention of the grant of the patent: **19.08.2020**
(21) Application number: 18203501.4
(22) Date of filing: 19.12.2012
(51) Int. Cl.: F02C 3/107, F02K 3/06, F02C 7/36

(54) **GAS TURBINE ENGINE LUBRICATION**
GASTURBINENMOTORSCHMIERUNG
LUBRIFICATION DE MOTEUR DE TURBINE À GAZ

(30) Priority: 30.12.2011 US 201113340743
(43) Date of publication of application: 20.03.2019
(62) Divisional of application: 12198045.2
(73) Proprietor: United Technologies Corporation, Farmington, CT 06032 (US)
(72) Inventor: McCUNE, Michael E., Colchester, CT 06415 (US); PORTLOCK, Lawrence E., Bethany, CT 06524 (US); Schwarz, Frederick M., Glastonbury, CT 06033 (US)
(74) Representative: Dehns

(56) References cited:
- US-A- 3 747 343
- US-A- 6 158 210
- US-A1- 2008 006 018
- US-A1- 2009 081 039

## Description

### BACKGROUND OF THE INVENTION

This invention relates to a ring gear used in an epicyclic gear train of a gas turbine engine.

Gas turbine engines typically employ an epicyclic gear train connected to the turbine section of the engine, which is used to drive the turbo fan. In a typical epicyclic gear train, a sun gear receives rotational input from a turbine shaft through a compressor shaft. A carrier supports intermediate gears that surround and mesh with the sun gear. A ring gear surrounds and meshes with the intermediate gears. In arrangements in which the carrier is fixed against rotation, the intermediate gears are referred to as "star" gears and the ring gear is coupled to an output shaft that supports the turbo fan.

Typically, the ring gear is connected to the turbo fan shaft using a spline ring. The spline ring is secured to a flange of the turbo fan shaft using circumferentially arranged bolts. The spline ring includes splines opposite the flange that supports a splined outer circumferential surface of the ring gear. The ring gear typically includes first and second portions that provide teeth facing in opposite directions, which mesh with complimentary oppositely facing teeth of the star gears.

An epicyclic gear train must share the load between the gears within the system. As a result, the splined connection between the ring gear and spline ring is subject to wear under high loads and deflection. Since the spline connection requires radial clearance, it is difficult to get a repeatable balance of the turbo fan assembly. Balance can also deteriorate over time with spline wear.

A prior art turbine engine is disclosed in US-2009/0081039.

### SUMMARY OF THE INVENTION

According to the present invention, there is provided a turbine engine as claimed in claim 1.

In an embodiment of the foregoing turbine engine, the at least one tapered bearing includes a first tapered bearing and the at least one radially extending passage that includes a first passage and a second passage. The first passage is located at an axially aft side of the first tapered bearing and the second passage is located at an axially forward side of the first tapered bearing.

In a further embodiment of the foregoing turbine engine the fan shaft includes on a radially inner surface, at least one well extending between axial sides and a radial side, and the at least one passage opens at the radial side.

In a further embodiment of the foregoing turbine engine, the fan shaft includes, on a radially inner surface, a plurality of wells each extending between axial side walls and a radial side wall, and the at least one passage includes a plurality of passages that open at respective ones of the radial side walls of the plurality of wells.

In a further embodiment of the foregoing turbine engine, two wells of the plurality of wells are axially adjacent such that the two wells share a common axial side wall.

In a further embodiment of the foregoing turbine engine the axial side walls are gradually sloped.

In a further embodiment of the foregoing, the turbine engine, the epicyclic gear train has a gear reduction ratio of greater than or equal to 2.5.

Although different examples have the specific components shown in the illustrations, embodiments of this invention are not limited to those particular combinations. It is possible to use some of the components or features from one of the examples in combination with features or components of another of the examples.

These and other features disclosed herein can be best understood from the following specification and drawings, the following of which is a brief description.

### BRIEF DESCRIPTION OF THE DRAWINGS

Figure 1 is a partial cross-sectional view of a front portion of a gas turbine engine illustrating a turbo fan, epicyclic gear train and a compressor section.
Figure 2 is an enlarged cross-sectional view of the epicyclic gear train shown in Figure 1.
Figure 3 is an enlarged cross-sectional view of an example ring gear similar to the arrangement shown in Figure 2.
Figure 4 is a view of the ring gear shown in Figure 3 viewed in a direction that faces the teeth of the ring gear in Figure 3.

### DETAILED DESCRIPTION

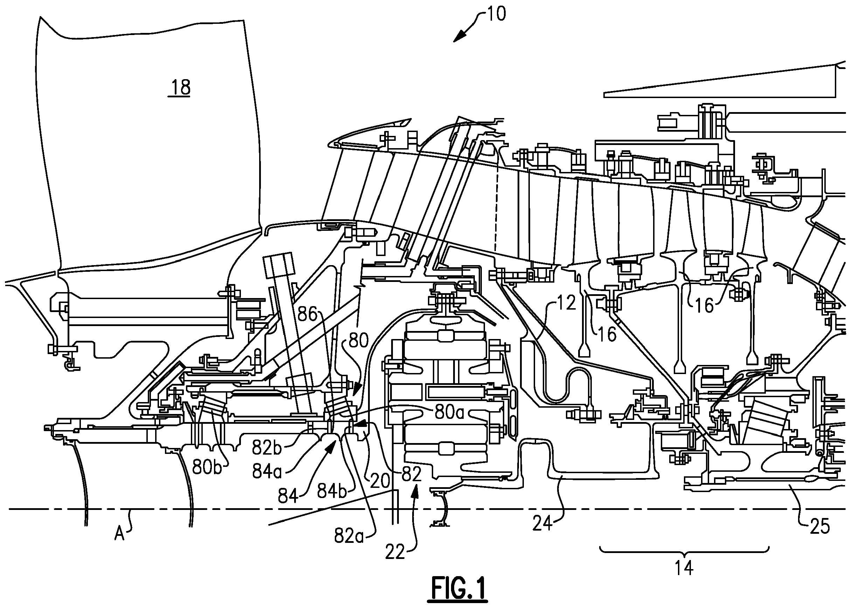

A portion of a gas turbine engine 10 is shown schematically in Figure 1. The turbine engine 10 includes a fixed housing 12 that is constructed from numerous pieces secured to one another. A compressor section 14 having compressor hubs 16 with blades are driven by a turbine shaft 25 about an axis A. A turbo fan 18 is supported on a turbo fan shaft 20 that is driven by a compressor shaft 24, which supports the compressor hubs 16, through an epicyclic gear train 22.

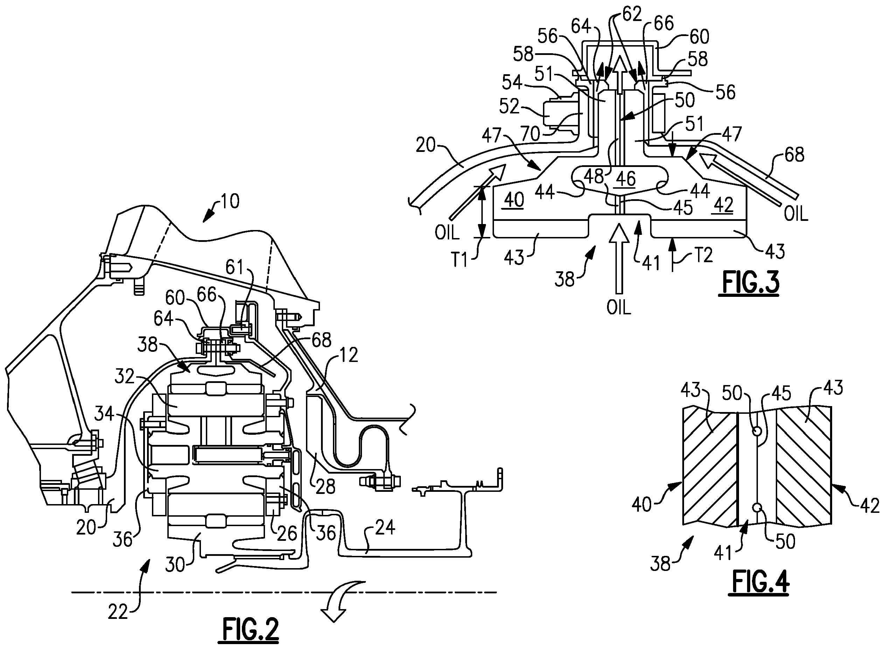

In the example arrangement shown, the epicyclic gear train 22 is a star gear train. Referring to Figure 2, the epicyclic gear train 22 includes a sun gear 30 that is connected to the compressor shaft 24, which provides rotational input, by a splined connection. A carrier 26 is fixed to the housing 12 by a torque frame 28 using fingers (not shown) known in the art. The carrier 26 supports star gears 32 using journal bearings 34 that are coupled to the sun gear 30 by meshed interfaces between the teeth of sun and star gears 30, 32. Multiple star gears 32 are arranged circumferentially about the sun gear 30. Retainers 36 retain the journal bearings 34 to the carrier 26. A ring gear 38 surrounds the carrier 26 and is coupled to the star gears 32 by meshed interfaces. The ring gear 38, which provides rotational output, is secured to the turbo fan shaft 20 by circumferentially arranged fastening elements, which are described in more detail below.

As shown, the fan shaft 20 is coupled to the ring gear 38 of the epicyclic gear train 22 and the fan 18 is mounted for rotation on the fan shaft 20. The fan 18 is supported on at least one tapered roller bearing 80 (Figure 1). As shown, the at least one tapered roller bearing 80 includes tapered races such that axes of rotation of rollers supported on the races are transversely angled relative to the axis A of the engine 10.

In this example, there is a first tapered roller bearing 80a and a second, axially spaced tapered roller bearing 80b. The fan shaft 20 includes at least one radially extending passage 82 adjacent and in communication with the at least one tapered bearing 80. In one example, the at least one radially extending passage 82 includes a first passage 82a and a second passage 82b. The first passage 82a is located at an axially aft side of the first tapered bearing 80a and the second passage 82b is located at an axially forward side of the first tapered bearing 80a, to provide lubricant to the first tapered bearing 80a. That is, lubricant is provided to the radial interior portion of the fan shaft 20, to lubricate and cool the first tapered bearing 80a. It is to be understood that the second tapered bearing 80b is similarly arranged with regard to additional radially extending passages through the fan shaft 20.

As shown in Figure 1, the fan shaft 20 includes, on a radially inner surface, at least one well 84 that extends between axial side walls 84a/84b and a radial wall 86. The at least one passage 82 opens at the radial side 86. In this example, there are two wells that feed, respectively, the first passage 82a and the second passage 82b. The two wells are axially adjacent such that they share a common axial side wall 84b. The axial side walls 84a/84b are gradually sloped to funnel lubricant to the radial wall 86 and thus into the corresponding passage 82a or 82b, for example.

In one disclosed, non-limiting embodiment, the engine 10 has a bypass ratio that is greater than about six to ten, the epicyclic gear train 22 is a planetary gear system or other gear system with a gear reduction ratio of greater than 2.3 or greater than 2.5, and a low pressure turbine of the engine 10 has a pressure ratio that is greater than about five. In one disclosed embodiment, the engine 10 bypass ratio is greater than about ten or greater than about 10.5:1, the turbofan 18 diameter is significantly larger than that of the low pressure compressor of the compressor section 14, and the low pressure turbine has a pressure ratio that is greater than about five. In one example, the epicyclic gear train 22 has a gear reduction ratio of greater than about 2.3:1 or greater than about 2.5:1.

A significant amount of thrust is provided by a bypass flow B due to the high bypass ratio. The fan 18 of the engine 10 is designed for a particular flight condition -- typically cruise at about 0.8M and about 35,000 feet (10,668 m). The flight condition of 0.8 M and 35,000 ft (10,668 m), with the engine at its best fuel consumption - also known as "bucket cruise TSFC" - is the industry standard parameter of lbm of fuel being burned divided by lbf of thrust the engine produces at that minimum point. "Low fan pressure ratio" is the pressure ratio across the fan blade alone. The low fan pressure ratio as disclosed herein according to one non-limiting embodiment is less than about 1.45. "Low corrected fan tip speed" is the actual fan tip speed in ft/sec divided by an industry standard temperature correction of [(Tambient deg R) / 518.7)^0.5] (where °R = K x 9/5). The "Low corrected fan tip speed" as disclosed herein according to one non-limiting embodiment is less than about 1150 ft / second (350.5 m/s).

Referring to Figures 3 and 4, the ring gear 38 is a two-piece construction having first and second portions 40, 42. The first and second portions 40, 42 abut one another at a radial interface 45. A trough 41 separates oppositely angled teeth 43 (best shown in Figure 4) on each of the first and second portions 40, 42. The arrangement of teeth 43 forces the first and second portions 40, 42 toward one another at the radial interface 45. The back side of the first and second portions 40, 42 includes a generally S-shaped outer circumferential surface 47 that, coupled with a change in thickness, provides structural rigidity and resistance to overturning moments. The first and second portions 40, 42 have a first thickness T1 that is less than a second thickness T2 arranged axially inwardly from the first thickness T1. The first and second portions 40, 42 include facing recesses 44 that form an internal annular cavity 46.

The first and second portions 40, 42 include flanges 51 that extend radially outward away from the teeth 43. The turbofan shaft 20 includes a radially outwardly extending flange 70 that is secured to the flanges 51 by circumferentially arranged bolts 52 and nuts 54, which axially constrain and affix the turbo fan shaft 20 and ring gear 38 relative to one another. Thus, the spline ring is eliminated, which also reduces heat generated from windage and churning that resulted from the sharp edges and surface area of the splines. The turbofan shaft 20 and ring gear 38 can be rotationally balanced with one another since radial movement resulting from the use of splines is eliminated. An oil baffle 68 is also secured to the flanges 51, 70 and balanced with the assembly.

Seals 56 having knife edges 58 are secured to the flanges 51, 70. The first and second portions 40, 42 have grooves 48 at the radial interface 45 that form a hole 50, which expels oil through the ring gear 38 to a gutter 60 that is secured to the carrier 26 with fasteners 61 (Figure 2). The direct radial flow path provided by the grooves 48 reduces windage and churning by avoiding the axial flow path change that existed with splines. That is, the oil had to flow radially and then axially to exit through the spline interface. The gutter 60 is constructed from a soft material such as aluminum so that the knife edges 58, which are constructed from steel, can cut into the aluminum if they interfere. Referring to Figure 3, the seals 56 also include oil return passages 62 provided by first and second slots 64 in the seals 56, which permit oil on either side of the ring gear 38 to drain into the gutter 60. In the arrangement shown in Figure 2, which is outside the wording of the claims, the first and second slots 64, 66 are instead provided in the flange 70 and oil baffle 68, respectively.

Although embodiments of this invention have been disclosed, a worker of ordinary skill in this art would recognize that certain modifications would come within the scope of this invention. For that reason, the following claims should be studied to determine the true scope and content of this invention.

## Claims

1. A turbine engine (10) comprising:
a fan shaft (20);
at least one tapered bearing (80) mounted on the fan shaft (20), the fan shaft including at least one radially extending passage (82) adjacent the at least one tapered bearing (80);
a fan (18) mounted for rotation on the tapered bearing; and
an epicyclic gear train (22) coupled to drive the fan, the epicyclic gear train including a carrier (26), supporting star gears (32) that mesh with a sun gear (30), and a ring gear (38) surrounding and meshing with the star gears (32), **characterised in that** each of the star gears is supported on a respective journal bearing, wherein the epicyclic gear train (22) defines a gear reduction ratio of greater than or equal to 2.3, the fan shaft (20) is coupled to the ring gear (38), the ring gear (38) is a two-piece construction having first and second portions (40, 42) that abut each other at a radial interface (45), a trough (41) separates oppositely angled teeth (43) on each of the first and second portions (40, 42), the first and second portions (40, 42) include flanges (51) that extend radially outward away from the teeth (43), the fan shaft (20) includes a radially outwardly extending flange (70) that is secured to the flanges (51) by circumferentially arranged bolts (52) and nuts (54), an oil baffle (68) is secured to the flanges (51, 70), knife edge seals (56) are secured to the flanges (51) of the first and second portions (40, 42), the first and second portions (40, 42) have grooves (48) at the radial interface (45) that form a hole (50) for expelling oil through the ring gear (38) to a gutter (60) secured to the carrier (26), and the seals (56) include oil return passages (62) provided by first and second slots (64) in the seals (56) to permit oil on either side of the ring gear (38) to drain into the gutter (60).

2. The turbine engine as recited in claim 1, wherein the at least one tapered bearing (80) includes a first tapered bearing and the at least one radially extending passage (82) includes a first passage (82a) and a second passage (82b), the first passage (82a) being located at an axially forward side of the first tapered bearing (80a) and the second passage (82b) being located at an axially aft side of the first tapered bearing (80a).

3. The turbine engine as recited in claim 1, wherein the fan shaft (20) includes, on a radially inner surface, at least one well (84) extending between axial sides and a radial side (86), and the at least one passage opens at the radial side (86).

4. The turbine engine as recited in claim 1, wherein the fan shaft (20) includes, on a radially inner surface, a plurality of wells each extending between axial side walls (84a, 84b) and a radial side wall, and the at least one passage includes a plurality of passages that open at respective ones of the radial side walls of the plurality of wells.

5. The turbine engine as recited in claim 4, wherein two wells of the plurality of wells are axially adjacent such that the two wells share a common axial side wall (84b).

6. The turbine engine as recited in claim 4, wherein the axial side walls (84a, 84b) are gradually sloped.

7. The turbine engine as recited in claim 1, wherein the epicyclic gear train (22) has a gear reduction ratio of greater than or equal to 2.5.

## Patentansprüche

1. Turbinenmotor (10), umfassend:
eine Fan-Welle (20);
mindestens ein konisches Lager (80), das an der Fan-Welle (20) angebracht ist, wobei die Fan-Welle mindestens einen sich radial erstreckenden Durchlass (82) beinhaltet, der an das mindestens eine konische Lager (80) angrenzt;
einen Fan (18), der zur Drehung an dem konischen Lager angebracht ist; und
ein Planetenradgetriebe (22), das zum Antreiben des Fans gekoppelt ist, wobei das Planetenradgetriebe einen Träger (26) beinhaltet, der Sternräder (32), die mit einem Sonnenrad (30) verzahnt sind, und ein Hohlrad (38), das die Sternräder (32) umgibt und damit verzahnt ist, trägt, **dadurch gekennzeichnet, dass** jedes der Sternräder auf einem jeweiligen Gleitlager gelagert ist, wobei das Planetenradgetriebe (22) ein Untersetzungsverhältnis von größer gleich 2,3 definiert, die Fan-Welle (20) an das Hohlrad (38) gekoppelt ist, das Hohlrad (38) eine zweiteilige Konstruktion mit einem ersten und einem zweiten Abschnitt (40, 42) ist, die aneinander an einer radialen Schnittfläche (45) anliegen, eine Rinne (41) entgegengesetzt abgewinkelte Zähne (43) an sowohl dem ersten als auch dem zweiten Abschnitt (40, 42) trennt, der erste und der zweite Abschnitt (40, 42) Flansche (51) beinhalten, die sich radial nach außen weg von den Zähnen (43) erstrecken, die Fan-Welle (20) einen sich radial nach außen erstreckenden Flansch (70) beinhaltet, der an den Flanschen (51) durch umlaufend angeordnete Schrauben (52) und Muttern (54) befestigt ist, ein Ölfangblech (68) an den Flanschen (51, 70) befestigt ist, Schneidringe (56) an den Flanschen (51) des ersten und des zweiten Abschnitts (40, 42) befestigt sind, der erste und der zweite Abschnitt (40, 42) Nuten (48) an der radialen Schnittfläche (45) aufweisen, die eine Bohrung (50) zum Ablassen von Öl durch das Hohlrad (38) zu einem an dem Träger (26) befestigten Abfluss (60) bilden, und die Dichtungen (56) Ölrückführdurchlässe (62) beinhalten, die durch einen ersten und einen zweiten Schlitz (64) in den Dichtungen (56) bereitgestellt werden, um zu ermöglichen, dass Öl auf jeder Seite des Hohlrads (38) in den Abfluss (60) abfließt.

2. Turbinenmotor nach Anspruch 1, wobei das mindestens eine konische Lager (80) ein erstes konisches Lager beinhaltet und der mindestens eine sich radial erstreckende Durchlass (82) einen ersten Durchlass (82a) und einen zweiten Durchlass (82b) beinhaltet, wobei sich der erste Durchlass (82a) an einer axial vorderen Seite des ersten konischen Lagers (80a) befindet und sich der zweite Durchlass (82b) an einer axial hinteren Seite des ersten konischen Lagers (80a) befindet.

3. Turbinenmotor nach Anspruch 1, wobei die Fan-Welle (20) an einer radialen Innenfläche mindestens eine Vertiefung (84) aufweist, die sich zwischen axialen Seiten und einer radialen Seite (86) erstreckt, und der mindestens eine Durchlass an der radialen Seite (86) offen ist.

4. Turbinenmotor nach Anspruch 1, wobei die Fan-Welle (20) an einer radialen Innenfläche eine Vielzahl von Vertiefungen beinhaltet, die sich jeweils zwischen axialen Seitenwänden (84a, 84b) und einer radialen Seitenwand erstrecken, und der mindestens eine Durchlass eine Vielzahl von Durchlässen beinhaltet, die zu jeweiligen der radialen Seitenwände der Vielzahl von Vertiefungen offen ist.

5. Turbinenmotor nach Anspruch 4, wobei zwei Vertiefungen der Vielzahl von Vertiefungen axial derart angrenzen, dass sich die beiden Vertiefungen eine gemeinsame axiale Seitenwand (84b) teilen.

6. Turbinenmotor nach Anspruch 4, wobei die axialen Seitenwände (84a, 84b) sanft geneigt sind.

7. Turbinenmotor nach Anspruch 1, wobei das Planetenradgetriebe (22) ein Untersetzungsverhältnis von größer gleich 2,5 aufweist.

## Revendications

1. Moteur de turbine (10) comprenant :
un arbre de soufflante (20) ;
au moins un palier conique (80) monté sur l'arbre de soufflante (20), l'arbre de soufflante comportant au moins un passage s'étendant radialement (82) adjacent à l'au moins un palier conique (80) ;
une soufflante (18) montée pour tourner sur le palier conique ; et
un train d'engrenages épicycloïdal (22) couplé pour entraîner la soufflante, le train d'engrenages épicycloïdal comportant un support (26), supportant des engrenages en étoile (32) qui s'engrènent avec un planétaire (30), et une couronne dentée (38) entourant et s'engrenant avec les engrenages en étoile (32), **caractérisé en ce que** chacun des engrenages en étoile est supporté sur un palier lisse respectif, dans lequel le train d'engrenages épicycloïdal (22) définit un rapport de réduction d'engrenage supérieur ou égal à 2,3, l'arbre de soufflante (20) est couplé à la couronne dentée (38), la couronne dentée (38) est une construction en deux parties ayant des première et seconde parties (40, 42) qui viennent en butée l'une contre l'autre au niveau d'une interface radiale (45), une auge (41) sépare des dents inclinées opposées (43) sur chacune des première et seconde parties (40, 42), les première et seconde parties (40, 42) comportent des brides (51) qui s'étendent radialement vers l'extérieur à l'écart des dents (43), l'arbre de soufflante (20) comporte une bride s'étendant radialement vers l'extérieur (70) qui est fixée aux brides (51) par des boulons (52) et des écrous (54) agencés circonférentiellement, un déflecteur d'huile (68) est fixé aux brides (51, 70), des joints de bord tranchant (56) sont fixés aux brides (51) des première et seconde parties (40, 42), les première et seconde parties (40, 42) ont des rainures (48) au niveau de l'interface radiale (45) qui forment un trou (50) pour expulser l'huile à travers la couronne dentée (38) vers une gouttière (60) fixée au support (26), et les joints (56) comportent des passages de retour d'huile (62) fournis par des première et seconde fentes (64) dans les joints (56) pour permettre à l'huile de chaque côté de la couronne dentée (38) de s'écouler dans la gouttière (60) .

2. Moteur de turbine selon la revendication 1, dans lequel l'au moins un palier conique (80) comporte un premier palier conique et l'au moins un passage s'étendant radialement (82) comporte un premier passage (82a) et un second passage (82b), le premier passage (82a) étant situé au niveau d'un côté axialement vers l'avant du premier palier conique (80a) et le second passage (82b) étant situé au niveau d'un côté axialement vers l'arrière du premier palier conique (80a).

3. Moteur de turbine selon la revendication 1, dans lequel l'arbre de soufflante (20) comporte, sur une surface radialement intérieure, au moins un puits (84) s'étendant entre les côtés axiaux et un côté radial (86), et l'au moins un passage s'ouvre au niveau du côté radial (86).

4. Moteur de turbine selon la revendication 1, dans lequel l'arbre de soufflante (20) comporte, sur une surface radialement intérieure, une pluralité de puits s'étendant chacun entre des parois latérales axiales (84a, 84b) et une paroi latérale radiale, et l'au moins un passage comporte une pluralité de passages qui s'ouvrent au niveau de parois respectives des parois latérales radiales de la pluralité de puits.

5. Moteur de turbine selon la revendication 4, dans lequel deux puits de la pluralité de puits sont axialement adjacents de sorte que les deux puits partagent une paroi latérale axiale commune (84b).

6. Moteur de turbine selon la revendication 4, dans lequel les parois latérales axiales (84a, 84b) sont progressivement inclinées.

7. Moteur de turbine selon la revendication 1, dans lequel le train d'engrenages épicycloïdal (22) a un rapport de réduction d'engrenage supérieur ou égal à 2,5.
